# EUROPEAN PATENT APPLICATION

(11) **EP 1 571 721 A1**
(43) Date of publication of application: **07.09.2005**
(21) Application number: 05003819.9
(22) Date of filing: 23.02.2005
(51) Int. Cl.: H01M 4/02

(54) **Method of preventing short circuiting in a lithium ion battery**

(30) Priority: 04.03.2004 US 793594
(71) Applicant: Celgard Inc., South Carolina 28273 (US)
(72) Inventor: Zhang, Zhengming, Charlotte, North Carolina 28270 (US)
(74) Representative: Schröder, Richard

(57) **Abstract**

The invention is a method for preventing short circuiting in a lithium ion battery. The battery has an anode made of intercalation compound, a cathode made of an intercalation compound, and a separator having a thickness of 25 microns or less sandwiched between the anode and the cathode. The method includes the steps of rounding or beveling the edge portion of the cathode, so that during charging when the anode and cathode expand and squeeze the separator, the rounded or beveled edge portion of the cathode cannot cut the separator.

## Description

The invention is directed toward preventing short circuiting in a lithium ion battery by rounding or beveling the cathode of the battery.

Short circuiting is a known problem in lithium ion batteries. Short circuiting occurs when the anode and the cathode come into physical contact. The separator interposed between the anode and the cathode keeps them from touching. The separator, however, can be breached. This can occur as a result of damage to the cell (e.g., crush or puncture), damage during manufacture (i.e., puncture of the separator), dendrite growth, or during charging. Preventing separator breach during charging is the focus of the present invention.

During charging, the anode, an intercalation compound (mostly carbon based compounds (e.g., coke and/or graphite), but also metal oxides (e.g., WO₂, MoO₂, TiS₂)), receives Li ion liberated from the cathode, an intercalation compound (mostly metal oxides (e.g., MoO₂, MnO₂, TiS₂, NbSe₃, LiCoO₂, LiNiO₂, LiMnO₄)). The lithium ions are held in the intersticial spaces formed by the molecules of the respective intercalation compounds. When the ions are accepted by the anode, the anode expands. The anode may expand 6-10% by volume. When the ions are released by the cathode, the cathode expands. The cathode expands because in the intersticial spaces are formed, in the case of metal oxides, by oxygen atoms (negatively charged) of the metal oxides that are stacked on the oxygen atoms of the metal oxides in the next plane. When the lithium ion (positively charged) is interposed between these planes, they tend to pull the planes together. So, when the lithium ions leave the cathode, the cathode expands. The cathode may expand by up to 3% by volume.

The expansion of the anode and cathode during charging causes the separator to be squeezed between the anode and the cathode.

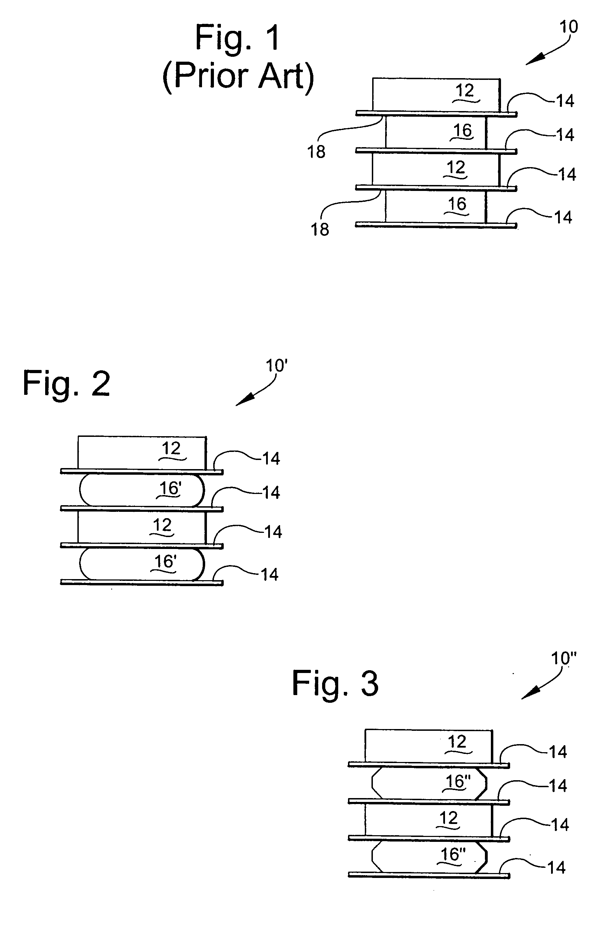

In a typical lithium ion battery, cylindrical or prismatic, the anode, separator, and cathode are assembled by winding or folding an anode tape, separator tape, and cathode tape together. The separator is the widest tape, then the anode, and the cathode tape is the narrowest. For example, the separator tape may be 60 mm wide, anode 59 mm, and cathode 58 mm. Moreover, the separators are extremely thin, usually about 1 mil (25 microns). Referring to Figure 1, a prior art cell 10 is illustrated as a stack of anodes 12, separators 14 and cathodes 16. During charging, when the anode and cathode expand, the cathode 12 can cut through the separator 14 at points 18. At point 18, the anode 12 and the cathode 16 can come into contact and cause a short circuit.

There is a need for preventing the foregoing short circuit scenario.

The invention is a method for preventing short circuiting in a lithium ion battery. The battery has an anode made of intercalation compound, a cathode made of an intercalation compound, and a separator having a thickness of 25 microns or less sandwiched between the anode and the cathode. The method includes the steps of rounding or beveling the edge portion of the cathode, so that during charging when the anode and cathode expand and squeeze the separator, the rounded or beveled edge portion of the cathode cannot cut the separator.

For the purpose of illustrating the invention, there is shown in the drawings a form that is presently preferred; it being understood, however, that this invention is not limited to the precise arrangements and instrumentalities shown.
- Figure 1: is a schematic illustration of a prior art cell.
- Figure 2: is a schematic illustration of a cell made according to the present invention.
- Figure 3: is a schematic illustration of a cell made according to the present invention.

Referring to drawings wherein like numerals indicate like elements, there is shown in Figure 1 a prior art cell 10.

Cell 10 is a conventional lithium ion cell, either cylindrical or prismatic. The anode is a lithiated intercalation compound (mostly carbon based compounds (e.g., coke and/or graphite), but also metal oxides (e.g., WO₂, MoO₂, TiS₂)). Preferably, the anode is a lithiated coke or graphite compound. The separator is a microporous polyolefin membrane preferably having a thickness of less than or equal to about 1 mil (25 microns). The separator may be a single layered membrane made of polyolefins (including polyethylene (LDPE, LLDPE, HDPE, UHMWPE, and combinations thereof) or a multi-layered membrane made of polyolefins (including polyethylene (low density polypropylene (LDPE), linear low density polypropylene (LLDPE), high density polypropylene (HDPE), ultra high molecular weight polypropylene (UHMWPE), and combinations thereof), polypropylene, polybutylene, polymethylpentene, and copolymers and mixtures thereof). The cathode is a lithiated intercalation compound (mostly metal oxides (e.g., MoO₂, MnO₂, TiS₂, NbSe₃, LiCoO₂, LiNiO₂, LiMnO₄)). Preferably, the cathode is a lithiated LiCoO₂, LiNiO₂, or LiMnO₄ compound. Each of the foregoing is conventional. See, for example, Linden, D., Editor, *Handbook of Batteries,* 2^{nd} Edition, McGraw-Hill, Inc., New York, NY, 1995, and Besenhard, J. O., Editor, *Handbook of Battery Materials,* Wiley-VCH Verlag GmbH, Weinheim, Germany, (1999), both incorporated herein by reference.

Cell 10 is a stack of anodes, separators, and cathodes. Anode 12 sits on a separator 14. Separator 14 is wider than anode 12. Separator 14 sits on cathode 16. Cathode 16 is not as wide as either anode 12 or separator 16. The cathode 16 has square edges. During charging when the anode 12 and cathode 16 expand (in the figure, expansion occurs in the vertical direction), pressure at point 18 can cut separator 14.

In Figures 2 and 3, the invention is illustrated. In cell 10', Figure 2, the cathode 16' has rounded edges. In cell 10", Figure 3, the cathode 16" has beveled edges. During charging when the anode and cathode expand, cutting of the separator is minimized or eliminated because the square edge has been eliminated.

The present invention may be embodied in other forms without departing from the spirit and the essential attributes thereof, and, accordingly, reference should be made to the appended claims, rather than to the foregoing specification, as indicated the scope of the invention.

## Claims

1. A method for preventing short circuiting in a lithium ion battery having an anode made of intercalation compound, a cathode made of a intercalation compound, and a separator having a thickness of 25 microns or less sandwiched between the anode and the cathode comprising the steps of:
rounding or beveling the edge portion of the cathode, so that during charging when the anode and cathode expand and squeeze the separator, the rounded or beveled edge portion of the cathode cannot cut the separator.

2. The method of claim 1 wherein the cathode intercalation compound being a metal oxide.
